# EUROPÄISCHE PATENTSCHRIFT

(11) **EP 0 786 288 B1**
(45) Veröffentlichungstag und Bekanntmachung des Hinweises auf die Patenterteilung: **02.05.2002**
(21) Anmeldenummer: 97100549.1
(22) Anmeldetag: 15.01.1997
(51) Int. Cl.: B01J 2/10, B01F 7/04, B01F 15/00

(54) **Verfahren zum Granulieren von Schlämmen**
Process for granulating sludges
Procédé de granulation de boues

(30) Priorität: 24.01.1996 DE 19602452
(43) Veröffentlichungstag der Anmeldung: 30.07.1997
(73) Patentinhaber: F. Zettl GmbH & Co., 81247 München (DE); VOEST-ALPINE Industrieanlagenbau GmbH, A-4020 Linz (AT)
(72) Erfinder: Zettl, Franz, Dipl.-Ing., 81247 München (DE); Grünbacher, Herbert, 4502 St. Marien (AT); Zettl, Stefan, Dipl.-Ing. Dr., 81247 München (DE); Schrey, Günter, Dipl.-Ing. Dr., 4040 Linz (AT)
(74) Vertreter: Laufhütte, Dieter, Dr.-Ing.

(56) Entgegenhaltungen:
- WO-A-96/22950
- FR-A- 2 396 941

## Beschreibung

Die Erfindung betrifft ein Verfahren zum Granulieren von Schlämmen, insbesondere von Schlämmen gebildet aus in der Hüttenindustrie abgeschiedenen Stäuben oder Kommunalschlämmen, sowie eine Anlage zur Durchführung des Verfahrens.

Bei vielen industriellen Prozessen, z.B. bei der Eisen- und Stahlverarbeitung, fallen bei der Entstanbung von Abluftströmen Schlämme aus Naßwäschern an, die aufgrund ihrer Konsistenz und Zusammensetzung kanm direkt weiter zu verarbeiten sind und daher hänfig deponiert werden müssen. Zusätzlich fallen in Abluftfilteranlagen trockene Stäube an, die vor einer Deponierung zu agglomerieren sind. Aus Gründen des Umweltschutzes und der Wirtschaftlichkeit ist es in der eisen- und stahlerzeugenden Industrie erforderlich, diese anfallenden Schlämme und Stäube durch eine geeignete Aufbereitung wieder dem Herstellungsprozeß zuzuführen, oder abhängig von der chemischen Zusammensetzung einem geeigneten anderen Verarbeiter als Rohstoff zur Verfügung zu stellen. Diese Aufbereitung maß zur Sicherstellung der Transport- und Lagerfähigkeit sowie für die anschließende Wiederverwertung die Herstellung von Stückigem Material mit ausreichender Festigkeit und entsprechender Granulatgröße gewährleisten.

Bei heute bekannten Granulier-Verfahren wird z.B. in diskontinuierlichen Granulatoren oder in Pelletiermaschinen mit hohem apparativem und kommerziellem Aufwand eine Stückigmachung erreicht. Aus der Praxis ist bekannt, daß oftmals aus ökonomischen Gründen auf eine Wiederverwertung mit Hilfe derartiger Systeme verzichtet wird, da eine Deponierung kostengünstiger ist. Da die zu verwertenden Schlämme und Stänbe hänfig kontinnierlich in einem ebenfalls kontinuierlichen Produktionsprozeß in großen Mengen anfallen, kommt ökonomischen Gesichtspunkten bei der Verwertung der Schlämme bzw. Stänbe große Bedeutung zu.

Die DE-A - 32 44 123 zeigt eine Vorrichtung zum Herstellen eines Granulates aus Schlämmen, Kalk und Flugasche, wobei diese Komponenten in einem Rührwerk gemischt und granuliert werden. Es handelt sich um ein einstufiges diskontinuierliches Verfahren.

Die DE-A - 29 43 558 zeigt ebenfalls eine einstufige Granulierung, wobei der Schlamm zuerst einer Entwässerung zugeführt wird, anschließend in einem Mischgranulator unter Beifügung von trockenem Granulat, Stäuben und Flugasche gemischt und granuliert und über einen Trockner ausgetragen wird.

Die Druckschrift FR-A-23 96 941 zeigt eine Vorrichtung, bei der zwei weitgehend identische Mischgranulatoren hintereinander geschaltet sind, in denen jeweils sowohl gemischt als auch granuliert wird. Durch die Kombination von Trocknen und Granulieren soll die Bearbeitung des Gutes in einem einzigen Durchgang bewerkstelligt werden, ohne daß ein nachgeschaltetes Zermahlen oder dergleichen notwendig wäre.

Der vorliegenden Erfindung liegt daher die Aufgabe zugrunde, ein verbessertes Verfahren bzw. eine verbesserte Vorrichtung anzugeben, mit dessen bzw. deren Hilfe eine verbesserte Qualität der Granulate, insbesondere die für eine Wiederverwendung als Wertstoff unbedingt erforderliche Qualität der Granulate gewährleistet werden kann.

Diese Aufgabe wird erfindungsgemäß durch ein Verfahren gemäß Anspruch 1 gelöst. Hinsichtlich der Vorrichtung wird diese Aufgabe durch eine Anlage gemäß Anspruch 11 gelöst Bevorzugte Ausführungsformen der Erfindung sind Gegenstand der weiteren Ansprüche.

Erfindungsgemäß ist also vorgesehen, daß die Schlämme in einem kontinuierlichen Verfahren verarbeitet werden, u. zw. In einer ersten Prozeßstufe kontinuierlich gemischt und in einer daran anschließenden zweiten Prozeßstufe kontinuierlich granuliert werden. Wesentlich für das erfindungsgemäße Verfahren ist die Zweistufigkeit, u. zw. Erstens eine gute Mischung der Schlämme, um ein ideales Ausgangsmaterial für die in der zweiten Stufe kontinuierlich durchzuführende Granulierung zur Verfügung stellen zu können.

Für bestimmte Schlämme, wie z.B. aus der Hüttenindustrie stammende Schlämme, kann es vorteilhaft bzw. notwendig sein, ein Bindemittel, wie Melasse, Wasserglas oder Branntkalk, zuzusetzen, wobei die Schlämme mit dem Bindemittel in der ersten Proezßstufe homogen vermischt werden. Vorzugsweise gelangt als Bindemittel Branntkalk zum Einsatz, mit dessen Hilfe bereits in der ersten Prozeßstufe eine Reaktion ausgelöst wird, die für die anschließende kontinuierliche Granulation die nötigen Haftmechanismen aktiviert.

Das erfindungsgemäße Verfahren wird vorzugsweise so durchgeführt, daß die Schlämme während der Mischung in der ersten Prozeßstufe in einem fluidisierten turbulenten dreidimensionalen Bewegungszustand gehalten werden, vorzugsweise durch Rotation einer Mischwelle in einem als Mischtrommel ausgebildeten Mischreaktor, wobei die Schlämme die Mischtrommel der Länge nach, gegebenenfalls unter Rückstauen, kontinuierlich durchströmen und daß die Schlämme in der zweiten Prozeßstufe durch Schubmischen im Haufwerk granuliert werden, vorzugsweise in mindestens einer als Granuliertrommel ausgebildeten Granuliereinrichtung, in der die Schlämme mit Hilfe einer rotierenden Granulierwelle bewegt werden, wobei die Schlämme die Granuliertrommel in Längsrichtung kontinuierlich durchsetzen und währenddessen zunehmend Granulate gebildet werden.

Zweckmäßig werden während des Mischens der Schlämme zur Einstellung einer bestimmten Feuchte der Schlämme zusätzlich Flüssigkeit und/oder gegebenenfalls zusätzlich Stäube eingespeist.

Eine Anlage zur Durchführung des Verfahrens ist durch eine Mischtrommel sowie mindestens eine nachgeordnete Granuliertrommel gekennzeichnet.

Gemäß einer bevorzugten Ausführungsform ist die Mischtrommel mit einer sich zentral über die Länge der Mischtrommel erstreckenden und mit Mischschaufeln bestückten Mischwelle versehen und sind in der Mischtrommel zusätzlich drehangetriebene Messerköpfe, deren Rotationsbewegung unterschiedlich ist zur Rotationsbewegung der Mischschaufeln, vorgesehen.

Vorzugsweise ist die Granuliertrommel mit einer mit Granulierschaufeln versehenen Granulierwelle versehen, die sich zentral längs der Granuliertrommel erstreckt.

Eine bevorzugte Ausführungsform ist dadurch gekennzeichnet, daß die Mischwelle und die Granulierwelle mit mehreren an sich radial erstreckenden Schaufelarmen befestigten Misch - bzw. Granulierschaufeln versehen sind und daß in die Mischtrommel von außen und sich etwa radial zur Mischtrommel erstreckende Messer-Antriebswellen ragen, die in Längsrichtung der Mischtrommel zwischen den Schaufelarmen liegend angeordnet sind und jeweils einen Messerkopf mit mindestens einem sich von der Messer-Antriebswelle weg erstreckenden Messer tragen.

Hierbei sind zweckmäßig die Misch- bzw. Granulierschaufeln jeweils von einem Schaufelblatt gebildet, dessen Mittelachse - bei der Mischtrommel - gegenüber dem zugehörigen Schaufelarm um einen Winkel β zwischen 20° und 60° und - bei der Granuliertrommel - um einen Winkel β', der um etwa 40 % geringer ist als β, nach vor, d.h. in Bewegungsrichtung, und nach oben geneigt ist.

Weiters ist hierbei zweckmäßig das Schaufelblatt bei radialer Projektion seiner Mittelachse zur Mischwelle bzw. Granulierwelle gegenüber der Mischwelle um einen Winkel α zwischen 20° und 60° und gegenüber der Granulierwelle um einen Winkel α', der um etwa 35 % geringer ist als α, geneigt angeordnet.

Um die Durchtrittsgeschwindigkeit der eingesetzten Materialien sicherzustellen, ist vorzugsweise in der Mischtrommel und gegebenenfalls in der Granuliertrommel nahe dem Austrittsende für die Schlämme bzw. Granulate jeweils ein Wehr vorgesehen, wobei die Durchtrittsgeschwindigkeit der eingesetzten Materialien in einfacher Weise einstellbar ist, wenn das Wehr höhenverstellbar ist.

Vorzugsweise liegt das Verhältnis des Innenvolumens der Mischtrommel zum Innenvolumen der Granuliertrommel in einem Bereich zwischen 0,3 und 0,7, es beträgt vorzugsweise etwa 0,5, und der Füllgrad der Mischtrommel liegt zwischen 30 % und 95 %, vorzugsweise zwischen 70 % und 85 %, wogegen der Füllgrad der Granuliertrommel zweckmäßig zwischen 15 und 75 %, vorzugsweise unter 40 %, liegt.

Zweckmäßig weist die Mischtrommel einen kleineren Durchmesser auf als die Granuliertrommel und ist die Mischwelle mit einer größeren Drehzahl antreibbar als die Granulierwelle.

Ausgezeichnete Granulierergebnisse lassen sich erzielen, wenn die Mischtrommel mit Froude-Zahlen größer als 1, vorzugsweise größer als 3, betrieben wird, und wenn weiters die Granuliertrommel mit Froude-Zahlen kleiner als 3, vorzugsweise viel kleiner als 1, betrieben wird.

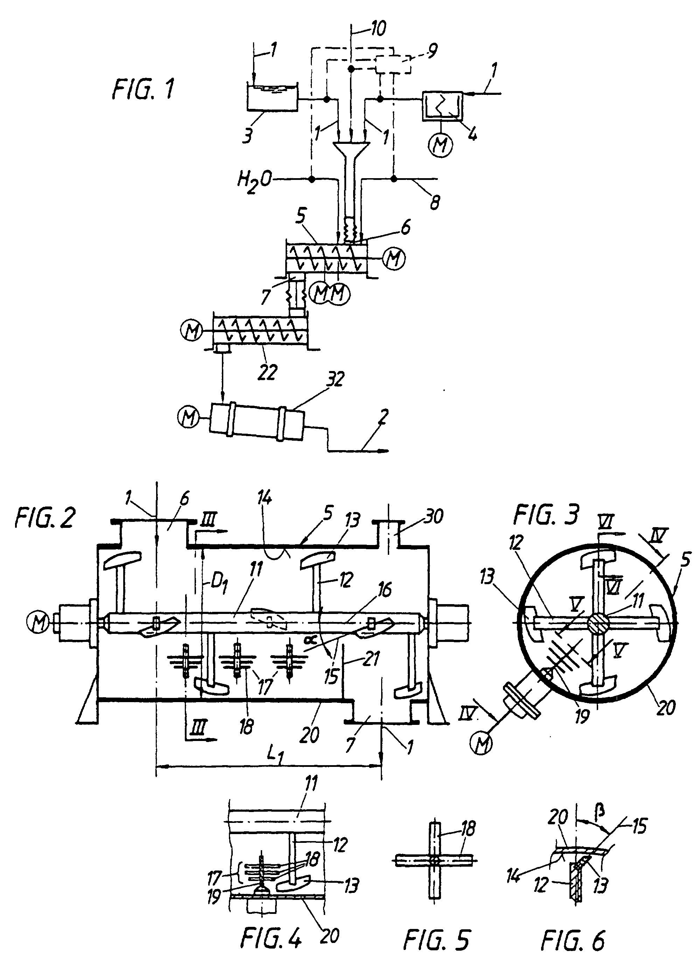

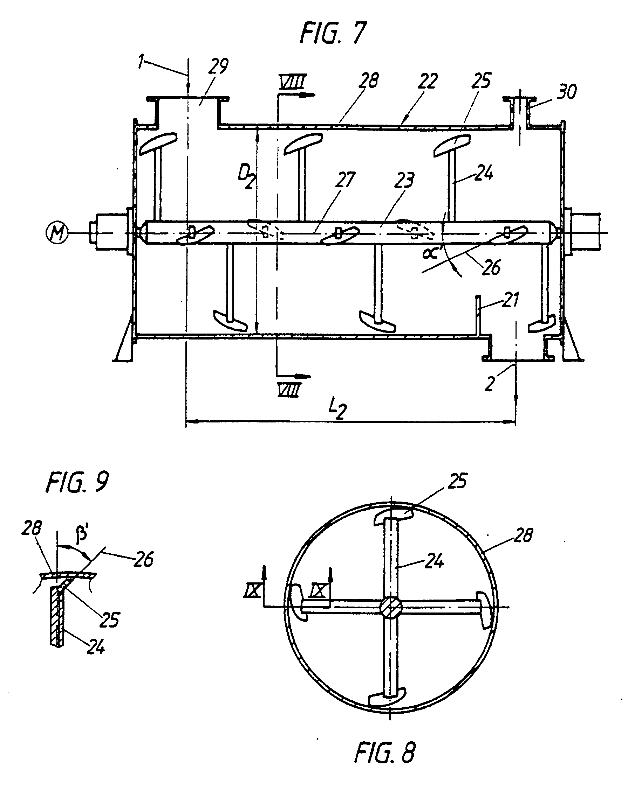

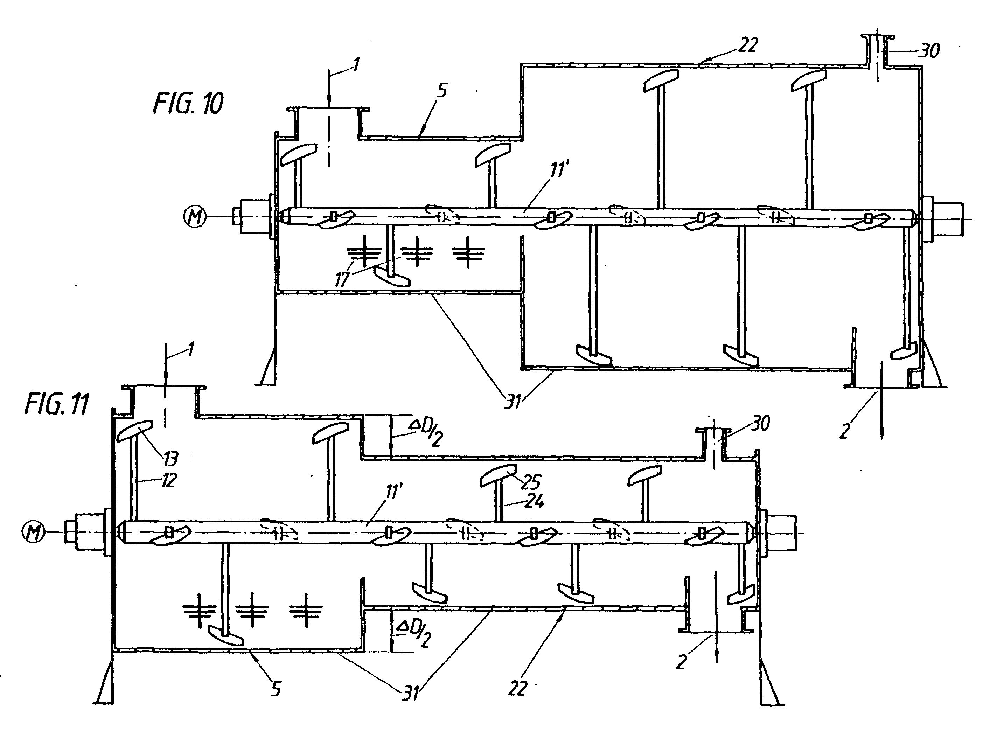

Die Erfindung ist nachfolgend anhand mehrerer in der Zeichnung schematisch dargestellter Ausführungsbeispiele näher erläutert, wobei Fig. 1 ein Flußdiagramm einer erfindungsgemäßen Anlage veranschaulicht. Fig. 2 zeigt einen Axialschnitt durch einen Mischer, Fig. 3 einen Schnitt quer zur Längsachse des Mischers gemäß der Linie III-III der Fig. 2. Die Fig. 4, 5 und 6 stellen Details des Mischers im Schnitt bzw. in Ansicht gemäß den Linien IV-IV, V-V und VI-VI der Fig. 3 dar. In Fig. 7 ist der Längsschnitt einer Granuliereinrichtung und in Fig. 8 ein Schnitt quer zur Längsachse der Granuliereinrichtung gemäß der Linie VIII-VIII der Fig. 7 gezeigt. Fig. 9 stellt ein Detail der Granuliereinrichtung im gemäß der Linie IX-IX der Fig. 8 geführten Schnitt dar. Die Fig. 10 und 11 veranschaulichen weitere Ausführungsformen der Erfindung.

Wie aus Fig. 1 ersichtlich, wird Schlamm 1 bzw. werden Schlämme 1 mit unterschiedlichem Wassergehalt, die zu einem Granulat 2 verarbeitet werden sollen, zunächst auf einen bestimmten Feuchtigkeitsgehalt eingestellt, u.zw. beispielsweise mit Hilfe eines Absetzbeckens 3 oder mittels eines Dekanters 4. Der Feuchtigkeitsgehalt der Schlämme 1 ist für das erfindungsgemäße Verfahren nur von untergeordneter Bedeutung. Als Schlämme 1 können Industrieschlämme, wie Schlamm aus der Hüttenindustrie, Kommunalschlämme oder sonstige Schlämme eingesetzt werden.

Die Schlämme 1 werden sodann in einen Mischer 5, der als Mischtrommel ausgebildet ist, eingebracht, wobei ein Einfüllstutzen 6 an einem Endbereich der Mischtrommel 5 und ein Ausgangsstutzen 7 am gegenüberliegenden Endbereich der Mischtrommel 5 angeordnet sind. Je nach Anwendungsfall können zusätzlich Stäube 8 in die Mischtrommel 5 dosiert werden. Über eine geeignete Feuchtemessung der jeweiligen Einsatzmaterialien kann mit Hilfe eines Regelkreises 9 Flüssigkeit, wie z.B. Wasser, über Düsen an geeigneter Stelle, vorzugsweise im ersten Drittel der Mischtrommel 5 - gesehen in Durchsatzrichtung der Einsatzmaterialien -, eingespritzt und so ein Feuchtegehalt zwischen 10 und 80 %, vorzugsweise kleiner oder gleich 40 %, eingestellt werden. Weiters wird in die Mischtrommel 5, falls erforderlich, ein Bindemittel 10 kontinuierlich über einen eigenen Zulaufstutzen oder den Einfüllstutzen 6 dosiert. Für aus der Hüttenindustrie stammende Schlämme wird Branntkalk in einem Massenverhältnis zwischen 0,2 bis 2 kg CaO/kg H₂O, vorzugsweise mit 0,6 kg CaO/kg H₂O, dosiert.

Je nach Zusammensetzung und Konsistenz der Einsatzmaterialien sowie den Anforderungen an die Granulatqualität werden unterschiedliche Bindemittel 10 verwendet. Es können z.B. gebrannter Kalk, Kalkhydrat, Melasse, Wasserglas oder auch Wasser zum Einsatz kommen.

Die Mischtrommel 5 ist mit einer sich zentral und über die gesamte Länge der Mischtrommel 5 erstreckenden und an den Stirnseiten der Mischtrommel 5 außenseitig drehbar gelagerten und mit einem Motor M antreibbaren Mischwelle 11 versehen, an der sich radial nach außen erstreckende Schaufelarme 12 angeordnet sind. An den äußeren Enden der Schaufelarme 12 sind jeweils Mischschaufeln 13 befestigt, z.B. angeschweißt oder angeschraubt. Die Schaufelblätter der Mischschaufeln 13 sind selbstreinigend und reichen bis nahe an die Trommelwand 14 der Mischtrommel 5 und sind gegenüber den Schaufelarmen 13 geneigt angeordnet, u.zw. in Bewegungsrichtung nach vome ansteigend. Ihre Mittelachse 15 schließt jeweils mit der Längsachse des zugehörigen Schaufelarmes 12 einen Winkel β, der zwischen 20 und 60° liegt, ein (vgl. Fig. 6).

Die radiale Projektion der Mittelachse 15 der Schaufelblätter gegen die Mittelachse 16 der Mischwelle 11 schließt mit der Mittelachse 16 der Mischwelle 11 einen Winkel α, der ebenfalls zwischen 20 und 60° liegt, ein (vgl. Fig. 2).

Die Schaufelarme 12 sind in größeren Abständen voneinander angeordnet. Zwischen den Schaufelarmen 12 sind Messerköpfe 17 vorgesehen, deren Messer 18 etwa radial gerichtet sind zur Antriebswelle 19 der Messerköpfe 17. Die Antriebswellen 19 der Messerköpfe 17 erstrecken sich etwa radial durch die Trommelwand 20 in das Innere der Mischtrommel 5. Die Messerköpfe 17 sind jeweils mit eigenen Motoren M antreibbar und außerhalb des Trommelmantels 20 gelagert.

Durch das Zusammenwirken der Mischschaufeln 13 mit den Messerköpfen 17 werden die Einsatzmaterialien in kurzer Zeit homogen vermischt, wobei die Drehzahlen der Mischwelle 11 und der Messerköpfe 17 so gewählt werden, daß ein mechanisch erzeugtes dreidimensionales Wirbelbett entsteht, in dem die Einsatzmaterialien in fluidisiertem turbulentem Bewegungszustand gehalten werden. Die einzelnen Partikel haben daher einen hohen Freiheitsgrad, wodurch sehr kurze Mischzeiten bei gleichzeitig hoher Mischgüte gewährleitset werden können.

Die Messerköpfe 17 rotieren mit Drehzahlen zwischen 500 und 5000 U/min, vorzugsweise mit Drehzahlen zwischen 1500 und 3000 U/min. Die Mischtrommel 5 wird mit Froude-Zahlen größer als 1, vorzugsweise größer als 3, betrieben, wobei die mittlere Verweilzeit der Partikel in der Mischtrommel 5 zwischen 30 und 300 s, beispielsweise bei 90 s, liegt. Die Verweilzeit ist durch die geeignete Wahl der Baulänge L₁ und des Durchmessers D₁ der Mischtrommel 5 sowie durch eine geeignete Wahl des Verhältnisses Füllgrad zu Volumensstrom gewährleistet.

Vorzugsweise ist in der Mischtrommel 5 knapp vor dem Austrittsstutzen 7 ein Wehr 21 vorgesehen, welches bevorzugt höhenverstellbar ist. Somit kann auch durch das Wehr 21 die mittlere Verweilzeit bzw. der gewünschte Füllgrad gewährleistet bzw. eingestellt werden.

Wenn eine Zugabe eines Bindemittels 10 in den Mischer 5 erfolgt, so ist zur Erzielung einer ausreichenden Mischgüte mindestens eine Verweilzeit von 45 s, vorzugsweise von mindestens 60 s, erforderlich. Dies kann durch eine geeignete Anordnung eines Zulaufstutzens für das Bindemittel 10 sichergestellt werden, sofern das Bindemittel 10 nicht über den Einfüllstutzen 6 für den Schlamm 1 eingebracht wird. Der Füllgrad der Mischtrommel 5 ist vorteilhaft auf Werte zwischen 30 und 95 %, vorzugsweise auf Werte zwischen 70 und 85 %, einzustellen.

Innerhalb der Mischtrommel 5 kommt es bei Verwendung von Branntkalk als Bindemittel 10 spontan zu einer stark exothermen Reaktion mit Wasser zu Calciumhydroxid: CaO + H₂O → Ca(OH)₂. Ein Teil des zunächst im Schlamm 1 vorhandenen Wassers wird hierdurch chemisch gebunden, das Calciumoxid quillt. Der Löschkalk besitzt die Eigenschaft eines Hydrogels, dessen Kolloideigenschaften für den Granulierprozeß wichtig sind. Durch das Bindemittel 10 und das vorhandene Wasser entstehen in einer ersten Phase aufgrund der Kapillarkräfte Flüssigkeitsbrücken. Mit der chemischen Reaktion des Bindemittels 10 härtet dieses aus und verfestigt sich, so daß Feststoffbrücken gebildet werden, welche eine hohe Festigkeit aufweisen.

Beim Kalklöschen entsteht eine hohe Reaktionswärme, die zur Verdampfung von Wasser führt. Durch das Anlagern von Wasser an den Branntkalk sowie aufgrund der Verdampfung wird der freie Wasseranteil des Schlammes 1 auf unter 25 %, typischerweise unter 20 % kg H₂O/kg Einsatzmaterialien reduziert.

Die eigentliche Granulierung findet erst in der zweiten Prozeßstufe statt, u.zw. in der in Flußrichtung der Einsatzstoffe der Mischtrommel 5 nachgeordneten Granuliereinrichtung 22, die von einer Granuliertrommel gebildet ist (Fig. 7 bis 9). Im Inneren der Granuliertrommel 22 erstreckt sich zentral eine an den Enden der Granuliertrommel 22 gelagerte Granulierwelle 23, die mittels eines eigenen Motors M antreibbar ist.

An der Granulierwelle 22 sind Schaufelarme 24, die sich radial nach außen erstrecken, befestigt. Diese Schaufelarme 24 tragen Granulierschaufeln 25, die ähnlich gestaltet sind wie die Mischschaufeln 13. Die Granulierschaufeln 25 weisen ebenfalls Schaufelblätter auf, deren Mittelachsen 26 gegenüber den zugehörigen Schaufelarmen 24 (d.h. deren Längserstreckung) mit einem Winkel β', der um etwa 40 % geringer ist als der Winkel β, nach vor, d.h. in Bewegungsrichtung, und nach oben geneigt sind. Bei jeweils radialer Projektion der Mittelachsen 26 der Schaufelblätter zur Mittelachse 27 der Granulierwelle 23 ergibt sich ein Neigungswinkel α' zwischen der Projektion der Mittelachse 26 der Schaufelblätter und der Mittelachse 27 der Granulierwelle, der um etwa 35 % geringer ist als der Winkel α bei der Mischtrommel 5.

In der Granuliertrommel 22 sind keine Messerköpfe 17 vorgesehen. Das Einsatzmaterial wird hier ruhiger geführt, u.zw. erfolgt hier ein Schubmischen im Haufwerk. Hierunter ist folgendes zu verstehen: Das schon mit etwas festerer Konsistenz in die Granuliertrommel 22 gelangende Einsatzmaterial bildet in der Granuliertrommel 22 ein Haufwerk, das von den Granulierschaufeln 24 durchsetzt, d.h. durchgearbeitet wird. Die Granulierschaufeln 24 schieben sich durch das Haufwerk, und die Partikel werden hierdurch zueinander geführt, so daß ein Aufbau eines Granulates 2 durch die zwischen den Partikeln wirkenden Kräfte stattfinden kann.

Die Drehzahl der Granulierwelle 23 wird so gewählt, daß ein ständiges wiederholtes Abrollen des Produktes an der Trommelwandung 28 zur Aufbauagglomeration führt. Die Partikelvergrößerung erfolgt aufgrund der Anlagerung (Schneeballeffekt).

In der Granuliertrommel 22, die ebenfalls mit einem Wehr 21 bestückt sein kann, ist es zur Bildung der Granulate 2 erforderlich, daß eine schonende Behandlung des Einsatzmaterials stattfindet. Erst dadurch können sich aus den beim Eingangsstutzen 29 bei der Granuliertrommel 22 noch kleinen Granulatkeimen durch Zusammenfügen der Partikel Granulate 2 in der gewünschten Größe bilden. Die schonende Granulatbehandlung erfordert somit eine längere Verweilzeit der Einsatzmaterialien in der Granuliertrommel 22, wobei die Baulänge L₂ und der Durchmesser D₂ der Granuliertrommel 22 im Hinblick auf die Durchsatzleistung, die mittlere Verweilzeit und den Füllgrad ausgelegt sein müssen. Die Granuliertrommel 22 wird mit Froude-Zahlen kleiner als 3 betrieben. Die mittlere Verweilzeit in der Granuliertrommel 22 liegt zwischen 60 und 600 s, beispielsweise bei 120 s. Der Füllgrad liegt bei 15 bis 75, vorzugsweise bei weniger als 40 %.

In der Granuliertrommel 22 erfolgt das endgültige Abbinden des Löschkalks nach dem folgenden Reaktionsmechanismus: Ca(OH)₂ + CO₂ → CaCO₃ + H₂O. Mit dem Kohlendioxid aus der Luft sowie aufgrund der erhöhten Granulattemperatur durch die Löschreaktion entstehen sehr feste Granulate 2.

Durch den Einsatz des Bindemittels 10 wird bei der Trocknung mit Temperaturen im Mischer 5 und in der Granuliereinrichtung 22 von bis zu ca. 120°C eine Krustenbildung vermindert. Die entstehenden Brüden werden sowohl im Mischer 5 als auch in der Granuliereinrichtung 22 über einen separaten Brüdenstutzen 30 und einen nicht dargestellten Brüdenkondensator abgeleitet.

Schaufeln 13 und 25 und Schaufelarme 12 und 24 sowohl der Mischtrommel 5 als auch der Granuliertrommel 22 sind entsprechend den Eigenschaften der eingesetzten Materialien in verschleiß- bzw. korrosionshemmenden Werkstoffen ausgeführt.

Das Verhältnis der Froude-Zahlen zwischen der Mischtrommel 5 und der Granuliertrommel 22 liegt zwischen 0,5 und 5. Dementsprechend sind die Umfangsgeschwindigkeiten und damit die Drehzahlen in Abhängigkeit vom Durchmesser D₁, D₂ der beiden Trommeln 5 bzw. 22 einzustellen.

Die Trennung der Verfahrensschritte in zwei Prozeßstufen Mischen/Reagieren in der Mischtrommel 5 einerseits und Agglomerieren in der Granuliertrommel 22 andererseits ermöglicht eine der jeweiligen Aufgabenstellung optimale Anpassung der apparativen Komponenten sowie der Prozeßbedingungen. Insbesondere können die Drehzahlen der Wellen 11 und 23 und somit die Froude-Zahlen, der Füllgrad und die Verweilzeit, die Schaufelanordnung und -geometrie sowie ihre Stellung zur Trommelwand 20 bzw. 28 für die Mischtrommel 5 und die Granuliertrommel 22 unabhängig voneinander eingestellt werden. Diese gegenüber einem einstufigen Verfahren zusätzlichen Freiheitsgrade ermöglichen es erst, die für eine Wiederverwendung als Wertstoff unbedingt notwendige Qualität der Granulate 2 zu gewährleisten.

Alternativ zu der oben beschriebenen Ausführungsform, die in den Fig. 2 bis 9 dargestellt ist, gemäß der die Granulation in einer einzigen Granuliertrommel 22 mit einem gegenüber der Mischtrommel 5 wesentlich höheren Innenvolumen durchgeführt wird, könnten auch zwei oder mehrere Granuliertrommeln 22 von einer einzigen Mischtrommel 5 aus beschickt werden.

Statt einer getrennten Bauweise von Mischtrommel 5 und Granuliertrommel 22 besteht auch die Möglichkeit, beide in einer Einheit zu kombinieren, wie dies in den Fig. 10 und 11 veranschaulicht ist. Dabei sind Mischer 5 und Granuliereinrichtung 22 als Kompaktanlage ausgebildet, die von einer einstückigen Kombitrommel 31 gebildet ist. Die Kombitrommel 31 kann im Übergangsbereich zwischen Mischer 5 und Granuliereinrichtung 22 einen Durchmessersprung ΔD aufweisen, um den erforderlichen Verweilzeiten und Umfangsgeschwindigkeiten gerecht zu werden. Mischer 5 und Granuliereinrichtung 22 beinhalten eine gemeinsame Welle 11', an der die Werkzeuge 13, 25 angebracht sind. Der Vorteil dieser Varianten ist darin zu sehen, daß die Investitionskosten niedriger sind.

Zur zusätzlichen Verbesserung der Granulatform sowie ihrer Formstabilität und zur Erzielung eines engen Verstellungsspektrums kann zusätzlich zu der oben beschriebenen zweistufigen Vorrichtungen eine Rollierstufe 32 nachgeschaltet werden. Diese wird im wesentlichen aus einem horizontalen Drehrohr mit einer leichten Neigung zum Auslauf gebildet

## Patentansprüche

1. Verfahren zum Granulieren von Schlämmen (1), insbesondere von Schlämmen gebildet aus in der Hüttenindustrie abgeschiedenen Stäuben oder Kommunalschlämmen, wobei die Schlämme (1) in einem kontinuierlichen Verfahren mit zwei unterschiedlich ausgebildeten Prozeßstufen verarbeitet werden, und zwar in einer ersten Prozeßstufe kontinuierlich zunächst nur gemischt und in einer daran anschließenden zweiten Prozeßstufe dann kontinuierlich granuliert werden.

2. Verfahren nach Anspruch 1, wobei den Schlämmen (1) ein Bindemittel (10), wie Melasse oder Wasserglas, vorzugsweise Branntkalk, zugesetzt wird und die Schlämme (1) in der ersten Prozeßstufe mit dem Bindemittel (10) gemischt werden.

3. Verfahren nach Anspruch 1 oder 2, wobei die Schlämme (1) während der Mischung in der ersten Prozeßstufe in einem fluidisierten turbulenten dreidimensionalen Bewegungszustand gehalten werden, vorzugsweise durch Rotation einer Mischwelle (11, 11') in einem als Mischtrommel (5) ausgebildeten Mischreaktor, wobei die Schlämme (1) die Mischtrommel (5) der Länge nach, gegebenenfalls unter Rückstauen, kontinuierlich durchströmen, und daß die Schlämme (1) in der zweiten Prozeßstufe durch Schubmischen im Haufwerk granuliert werden, vorzugsweise in mindestens einer als Granuliertrommel (22) ausgebildeten Granuliereinrichtung, in der die Schlämme mit Hilfe einer rotierenden Granulierwelle (23) bewegt werden, wobei die Schlämme die Granuliertrommel (22) in Längsrichtung kontinuierlich durchsetzen und währenddessen zunehmend in Granulate (2) geformt werden.

4. Verfahren nach einem oder mehreren der Ansprüche 1 bis 3, wobei während des Mischens der Schlämme (1) zur Einstellung einer bestimmten Feuchte der Schlämme (1) zusätzlich Flüssigkeit und/oder gegebenenfalls zusätzlich Stäube (8) eingespeist werden.

5. Verfahren nach einem oder mehreren der Ansprüche 3 bis 4, wobei der Füllgrad der Mischtrommel (5) zwischen 30% und 95%, vorzugsweise zwischen 70% und 85% liegt.

6. Verfahren nach einem oder mehreren der Ansprüche 3 bis 5, wobei der Füllgrad der Granuliertrommel (22) zwischen 15% und 75%, vorzugsweise unter 40% liegt.

7. Verfahren nach einem oder mehreren der Ansprüche 3 bis 6, wobei die Mischwelle (11) mit einer größeren Drehzahl angetrieben wird als die Granulierwelle (23).

8. Verfahren nach einem oder mehreren der Ansprüche 3 bis 7, wobei die Mischtrommel (5) mit Froude-Zahlen größer als 1, vorzugsweise größer als 3, betrieben wird.

9. Verfahren nach einem oder mehreren der Ansprüche 3 bis 8, wobei die Granuliertrommel (22) mit Froude-Zahlen kleiner als 3 betrieben wird.

10. Verfahren nach den Ansprüchen 8 und 9, wobei das Verhältnis der Froude-Zahlen, mit der die Mischtrommel (5) und mit der die Granuliertrommel (22) betrieben werden, zwischen 0,5 und 5 liegt.

11. Anlage zur Durchführung des Verfahrens nach einem der vorhergehenden Ansprüche, mit einer Mischtrommel (5) und mindestens einer der Mischtrommel (5) nachgeordneten Granuliertrommel (22), wobei die Mischtrommel (5) derart ausgebildet ist, daß die Schlämme darin kontinuierlich ausschließlich gemischt werden, und die Granuliertrommel (22) derart ausgebildet ist, daß die Schlämme darin kontinuierlich granuliert werden.

12. Anlage nach Anspruch 11, wobei die Mischtrommel (5) mit einer sich zentral über die Länge der Mischtrommel (5) erstreckenden und mit Mischschaufeln (13) bestückten Mischwelle (11, 11') versehen ist und wobei in der Mischtrommel (5) zusätzlich drehangetriebene Messerköpfe (17), deren Rotationsbewegung unterschiedlich ist zur Rotationsbewegung der Mischschaufeln (13), vorgesehen sind.

13. Anlage nach Anspruch 11 oder 12, wobei die Granuliertrommel (22) mit einer mit Granulierschaufeln (25) versehenen Granulierwelle (23, 11') versehen ist, die sich zentral längs der Granuliertrommel (22) erstreckt.

14. Anlage nach Anspruch 13, wobei die Mischwelle (11, 11') und die Granulierwelle (23, 11') mit mehreren an sich radial erstreckenden Schaufelarmen (12, 24) befestigten Misch- bzw. Granulierschaufeln (13, 25) versehen sind und wobei in die Mischtrommel (5) von außen und sich etwa radial zur Mischtrommel (5) erstreckende Messer-Antriebswellen (19) ragen, die in Längsrichtung der Mischtrommel (5) zwischen den Schaufelarmen (12) liegend angeordnet sind und jeweils einen Messerkopf (17) mit mindestens einem sich von der Messer-Antriebswelle weg erstreckenden Messer (18) tragen.

15. Anlage nach Anspruch 14, wobei die Misch- bzw. Granulierschaufeln (13, 25) jeweils von einem Schaufelblatt gebildet sind, dessen Mittelachse (15) - bei der Mischtrommel (5) - gegenüber dem zugehörigen Schaufelarm (12) um einen Winkel β zwischen 20° und 60° und - bei der Granuliertrommel (22) - um einen Winkel β', der um etwa 40% geringer ist als β, nach vor, d.h. in Bewegungsrichtung, und nach oben geneigt ist.

16. Anlage nach Anspruch 15, wobei das Schaufelblatt bei radialer Projektion seiner Mittelachse (15) zur Mischwelle (11) bzw. Granulierwelle (23) gegenüber der Mischwelle (11) um einen Winkel α zwischen 20° und 60° und gegenüber der Granulierwelle (23) um einen Winkel α', der um etwa 35% geringer ist als α, geneigt angeordnet ist.

17. Anlage nach einem oder mehreren der Ansprüche 11 bis 16, wobei in der Mischtrommel (5) und gegebenenfalls in der Granuliertrommel (22) nahe dem Austrittsende für die Schlämme (1) bzw. Granulate (2) jeweils ein Wehr (21) vorgesehen ist.

18. Anlage nach Anspruch 17, wobei das Wehr (21) höhenverstellbar ist.

19. Anlage nach einem oder mehreren der Ansprüche 11 bis 18, wobei das Verhältnis des Innenvolumens der Mischtrommel (5) zum Innenvolumen der Granuliertrommel (22) in einem Bereich zwischen 0,3 und 0,7 liegt, vorzugsweise etwa 0,5 beträgt.

20. Anlage nach einem oder mehreren der Ansprüche 11 bis 19, wobei die Mischtrommel (5) einen kleineren Durchmesser (D₁) aufweist als die Granuliertrommel (22).

## Claims

1. Method for granulating sludges (1), in particular sludges formed from dusts which have been collected in the metallurgical industry or communal sludges, the sludges (1) being processed in a continuous method with two differently configured process stages, specifically, in a first process stage, being continuously just mixed initially and then, in a subsequent second process stage, being continuously granulated.

2. Method according to Claim 1, in which a binder (10), such as molasses or water glass, preferably calcined lime, is added to the sludges (1) and the sludges are mixed with the binder (10) in the first process stage.

3. Method according to Claim 1 or 2, in which the sludges (1), during the mixing in the first process stage, are kept in a fluidized, turbulent, three-dimensionally moving state, preferably by rotation of a mixing shaft (11, 11') in a mixing reactor which is designed as a mixing drum (5), the sludges (1) flowing continuously through the mixing drum (5) over its length, if appropriate with a build-up, and that the sludges (1), in the second process stage, are granulated by shear mixing in the aggregate, preferably inside at least one granulating device which is designed as a granulating drum (22) and in which the sludges are moved with the aid of a rotating granulating shaft (23), the sludges passing continuously through the granulating drum (22) in the longitudinal direction and, during this movement, being increasingly formed into granules (2).

4. Method according to one or more of Claims 1 to 3, in which, during the mixing of the sludges (1), liquid and/or, if appropriate, dusts (8) are additionally fed in in order to establish a specific moisture content of the sludges (1).

5. Method according to one or more of Claims 3 to 4, in which the filling level of the mixing drum (5) is between 30% and 95%, preferably between 70% and 85%.

6. Method according to one or more of Claims 3 to 5, in which the filling level of the granulating drum (22) is between 15% and 75%, preferably below 40%.

7. Method according to one or more of Claims 3 to 6, in which the mixing shaft (11) is driven at a higher rotational speed than the granulating shaft (23).

8. Method according to one or more of Claims 3 to 7, in which the mixing drum (5) is operated with Froude numbers of greater than 1, preferably greater than 3.

9. Method according to one or more of Claims 3 to 8, in which the granulating drum (22) is operated with Froude numbers of less than 3.

10. Method according to Claims 8 and 9, in which the ratio of the Froude numbers with which the mixing drum (5) and the granulating drum (22) are operated is between 0.5 and 5.

11. Installation for carrying out the method according to one of the preceding claims, having a mixing drum (5) and at least one granulating drum (22) arranged downstream of the mixing drum (5), the mixing drum (5) being formed in such a manner that the sludges therein are continuously only mixed, and the granulating drum (22) is designed in such a manner that the sludges therein are continuously granulated.

12. Installation according to Claim 11, in which the mixing drum (5) is provided with a mixing shaft (11, 11') which extends centrally over the length of the mixing drum (5) and is equipped with mixing paddles (13), and in which rotationally driven blade heads (17), the rotational movement of which is different from the rotational movement of the mixing paddles (13), are additionally provided in the mixing drum (5).

13. Installation according to Claim 11 or 12, in which the granulating drum (22) is provided with a granulating shaft (23, 11') which is provided with granulating paddles (25) and extends centrally along the granulating drum (22).

14. Installation according to Claim 13, in which the mixing shaft (11, 11') and the granulating shaft (23, 11') are provided with a plurality of mixing or granulating paddles (13, 25), which are attached to radially extending paddle arms (12, 24), and in which blade drive shafts (19), which extend from the outside and approximately radially with respect to the mixing drum, are arranged lying between the paddle arms (12), as seen in the longitudinal direction of the mixing drum (5), and each bear a blade head (17) with at least one blade (18) extending away from the blade drive shaft, project into the mixing drum (5).

15. Installation according to Claim 14, in which the mixing or granulating paddles (13, 25) are each formed by a paddle vane, the centre axis (15) of which is inclined forwards, i.e. in the direction of movement, and upwards by an angle β of between 20° and 60° with respect to the associated paddle arm (12) - in the case of the mixing drum (5) - and by an angle β' which is approximately 40% smaller than β, in the case of the granulating drum (22).

16. Installation according to Claim 15, in which the paddle vane, if its centre axis (15) is radially projected with respect to the mixing shaft (11) or granulating shaft (23), is inclined at an angle α of between 20° and 60° with respect to the mixing shaft (11) and at an angle α' which is approximately 35% smaller than α with respect to the granulating shaft (23).

17. Installation according to one or more of Claims 11 to 16, in which in each case one weir (21) is provided in the mixing drum (5) and, if appropriate, in the granulating drum (22), close to the discharge end for the sludges (1) or granules (2).

18. Installation according to Claim 17, in which the height of the weir (21) is adjustable.

19. Installation according to one or more of Claims 11 to 18, in which the ratio of the internal volume of the mixing drum (5) to the internal volume of the granulating drum (22) lies in a range between 0.3 and 0.7, preferably amounts to approximately 0.5.

20. Installation according to one or more of Claims 11 to 19, in which the mixing drum (5) has a smaller diameter (D₁) than the granulating drum (22).

## Revendications

1. Procédé de granulation de boues (1), notamment de boues formées par des poussières éliminées par l'industrie métallurgique ou de boues communales, où les boues (1) sont traitées lors d'un procédé continu en deux étages de procédé réalisés différemment, à savoir, dans un premier étage de procédé, sont d'abord seulement mélangées continuellement et, dans un deuxième étage de procédé faisant suite à celui-ci, sont alors granulées continuellement.

2. Procédé selon la revendication 1, où il est ajouté aux boues (1) un liant (10), comme la mélasse ou le verre soluble, de préférence de la chaux vive, et les boues (1) sont mélangées dans le premier étage de procédé avec le liant (10).

3. Procédé selon la revendication 1 ou 2, où les boues (1) pendant le mélange dans le premier étage de procédé sont maintenues dans un état de mouvement fluidisé, turbulent, tridimensionnel, de préférence par rotation d'un arbre mélangeur (11, 11') dans un réacteur de mélange réalisé comme tambour mélangeur (5), où les boues (1) passent continuellement à travers le tambour mélangeur (5) en longueur, le cas échéant avec un reflux, et en ce. que les boues (1) dans le deuxième étage de procédé sont granulées par un mélange par poussée dans le tas accumulé, de préférence dans au moins une installation de granulation réalisée comme tambour granuleur (22) dans laquelle les boues sont déplacées à l'aide d'un arbre granuleur tournant (23), où les boues traversent le tambour granuleur (22) dans la direction longitudinale continuellement et sont formées pendant ce temps de plus en plus en des granulés (2).

4. Procédé selon l'une ou plusieurs des revendications 1 à 3, où pendant le mélange des boues (1), pour régler une humidité déterminée des boues (1), du liquide et/ou le cas échéant des poussières (8) sont amenés additionnellement.

5. Procédé selon l'une ou plusieurs des revendications 3 à 4, où le degré de remplissage du tambour mélangeur (5) se situe entre 30% et 95%, de préférence entre 70% et 85%.

6. Procédé selon l'une ou plusieurs des revendications 3 à 5, où le degré de remplissage du tambour granuleur (22) se situe entre 15% et 75%, de préférence sous 40%.

7. Procédé selon l'une ou plusieurs des revendications 3 à 6, où l'arbre mélangeur (1) est entraîné à une vitesse de rotation plus grande que l'arbre granuleur (23).

8. Procédé selon l'une ou plusieurs des revendications 3 à 7, où le tambour mélangeur (5) est amené à fonctionner à des nombres de Froude supérieurs à 1, de préférence supérieur à 3.

9. Procédé selon l'une ou plusieurs des revendications 3 à 8, où le tambour granuleur (22) est amené à fonctionner à des nombres de Froude inférieurs à 3.

10. Procédé selon les revendications 8 et 9, où le rapport des nombres de Froude, selon lesquels sont amenés à fonctionner le tambour mélangeur (5) et le tambour granuleur (22) est compris entre 0,5 et 5.

11. Installation pour la mise en oeuvre du procédé selon l'une des revendications précédentes, avec un tambour mélangeur (5) et au moins un tambour granuleur (22) disposé en aval du tambour mélangeur (5), où le tambour mélangeur (5) est réalisé de façon que les boues soient exclusivement mélangées d'une manière continue dans celui-ci, et le tambour granuleur (22) est réalisé de telle sorte que les boues sont granulées continuellement dans celui-ci.

12. Installation selon la revendication 11, où le tambour mélangeur (5) est pourvu d'un arbre mélangeur (11, 11') s'étendant centralement sur la longueur du tambour mélangeur (5) et pourvu d'auges de mélange (13), et où sont prévues dans le tambour mélangeur (5) additionnellement des têtes coupantes (17) entraînées en rotation dont le mouvement de rotation diffère du mouvement de rotation des auges de mélange (13).

13. Installation selon la revendication 11 ou 12, où le tambour granuleur (22) est pourvu d'un arbre granuleur (23, 11') présentant des pelles de granulation (25) qui s'étend centralement le long du tambour de granulation (22).

14. Installation selon la revendication 13, où l'arbre mélangeur (11, 11') et l'arbre de granulation (23, 11') sont pourvus de plusieurs pelles de mélange respectivement de granulation (13, 25) fixées à des bras de pelle (12, 24) s'étendant radialement, et où des arbres d'entraînement de couteau (19) font saillie dans le tambour mélangeur (5) de l'extérieur et s'étendent à peu près radialement au tambour mélangeur (5) qui sont disposés en se situant dans la direction longitudinale du tambour mélangeur (5) entre les bras de pelle (12) et portent respectivement une tête coupante (17) avec au moins un couteau s'étendant au loin de l'arbre d'entraînement de couteau.

15. Installation selon la revendication 14, où les pelles de mélange respectivement de granulation (13, 25) sont formées respectivement par une pale dont l'axe médian (15) - dans le tambour de mélange (5) - est orienté vers l'avant, c'est-à-dire dans la direction de déplacement, et vers le haut, par rapport au bras de pelle associé (12) selon un angle β entre 20° et 60° et - dans le tambour de granulation (22) - selon un angle β' qui est environ 40% plus petit que β.

16. Installation selon la revendication 15, où la pale, lors d'une projection radiale de son axe médian (15) à l'arbre de mélange (11) respectivement à l'arbre de granulation (23) est disposée selon une inclinaison par rapport à l'arbre de mélange (11) d'un angle α entre 20° et 60° et par rapport à l'arbre de granulation (23) d'un angle α' qui est environ 35% plus petit que α.

17. Installation selon l'une ou plusieurs des revendications 11 à 16, où il est prévu dans le tambour de mélange (5) et le cas échéant dans le tambour de granulation (12) à proximité de l'extrémité de sortie des boues (1) ou des granulés (2), respectivement un barrage (21).

18. Installation selon la revendication 17, où le barrage (21) est réglable en hauteur.

19. Installation selon l'une ou plusieurs des revendications 11 à 18, où le rapport du volume intérieur du tambour de mélange (5) au volume intérieur du tambour de granulation (22) se situe dans une plage entre 0,3 et 0,7, et où il est de préférence d'environ 0,5.

20. Installation selon l'une ou plusieurs des revendications 11 à 19, où le tambour mélangeur (5) a un diamètre (D₁) plus petit que le tambour de granulation (22).
